# EUROPEAN PATENT APPLICATION

(11) **EP 1 669 593 A1**
(43) Date of publication of application: **14.06.2006**
(21) Application number: 05251003.9
(22) Date of filing: 22.02.2005
(51) Int. Cl.: F02N 15/04, F16H 39/24, H02K 5/124

(54) **Sealed and oil lubricated starter motor gear reduction and overrunning clutch mechanism**

(30) Priority: 07.12.2004 US 5719
(71) Applicant: Remy International, Inc., Anderson, IN 46013 (US)
(72) Inventor: Lepres, Attila, Berzsenyi Daniel u. 1 (HU); Csaba, Fulop, Matyas Kiraly u. 59 (HU); Palfai, Balazs, Fishers Indiana 46038 (US); Kosztolanyi, Gabor, Badogos u. 41 (HU)
(74) Representative: Tranter, Andrew David

(57) **Abstract**

A method for lubricating gear reduction and overrunning clutch mechanisms in internal combustion engine starter motors, and apparatuses embodying the method. According to the present invention, sealing features are added to a gear reduction mechanism, overrunning clutch mechanism, or combined gear reduction and overrunning clutch mechanism. The sealed mechanism then is filled with oil for lubrication.

## Description

This application claims priority from United States Patent Application Serial No. 11/005,719, filed December 7, 2004.

### BACKGROUND

In a typical motor vehicle having an internal combustion engine and an electric starter motor, the operator of the vehicle cranks the engine by turning a key or pressing a button that closes an ignition switch. When the ignition switch closes, electric current is provided to the windings of an electric starter motor solenoid. Upon energization of the solenoid, a plunger rod carried within the solenoid is caused to move in a linear direction. A linking rod connects one end of the plunger rod to the starter motor's pinion gear drive shaft. As the plunger rod moves, it causes the linking rod to rotate about a pivot point. Rotation of the linking rod about the pivot point moves the pinion gear drive shaft in a linear direction toward the flywheel ring gear of the internal combustion engine. Upon reaching the ring gear, the teeth of the pinion gear are designed to mesh with the teeth of the ring gear. The starter motor contacts are closed and electric current is provided to the windings of the starter motor, causing the drive shaft of the electric motor to rotate the pinion gear thereby cranking the internal combustion engine.

It frequently is the case that the starter motor is not directly driven by the electromotive force produced by the starter motor windings. Instead, the starter motor comprises an armature shaft that is driven by the electromotive force produced by the starter motor windings. The armature shaft is connected to the drive shaft through a gear reduction mechanism. The gear reduction mechanism transmits the rotation of the armature shaft to the drive shaft, but in doing so reduces the rate at which the drive shaft rotates relative to the armature shaft.

It also frequently is the case that an overrunning clutch mechanism is deployed in conjunction with the armature shaft and drive shaft. Rotation of the armature shaft engages the overrunning clutch mechanism, transmitting torque to the drive shaft and pinion gear, thus cranking the internal combustion engine. When the internal combustion engine begins to run, the flywheel ring gear rotates the pinion gear and drive shaft faster than the armature shaft rotates. This high speed rotation unlocks the overrunning clutch mechanism. The drive shaft and pinion gear are thereby free to rotate relative to armature shaft. The high speed rotation of the drive shaft and pinion gear is not transmitted back to the armature shaft.

The starter motor gear reduction and overrunning clutch mechanisms may be separated, or may be combined into one mechanical unit. Grease typically is used to lubricate the starter motor gear reduction and overrunning clutch mechanisms. However, a problem arises in prior art starter motors employing gear reduction and/or overrunning clutch mechanisms lubricated with grease. Due to the centrifugal forces acting on the mechanisms, the grease expels to outer surfaces of the mechanisms and, due to its viscosity, remains there. After a period of time the inner components of the mechanisms do not have adequate lubrication.

A further problem arises because the prior art gear reduction and/or overrunning clutch mechanisms are not protected against foreign materials. Such foreign materials, such as armature brush dust and copper powder, can migrate into the gear reduction and/or overrunning clutch mechanisms. The foreign materials mix with the grease lubricant, spoiling the lubricating effect of the grease.

The aforementioned lubrication problems result in excessive component wear in the gear reduction and/or overrunning clutch mechanisms that reduces mechanism lifetime, and increased friction in the gear reduction and/or overrunning clutch mechanisms that reduces starter motor efficiency and power.

For the foregoing reasons it is desired to provide an improved method of lubrication for gear reduction and/or overrunning clutch mechanisms in internal combustion engine starter motors.

### SUMMARY

In an embodiment, the present invention comprises a rotational speed conversion assembly for use in conjunction with an internal combustion engine starter motor. A rotational speed conversion assembly according to this embodiment comprises a housing having a first end and a second end. A rotatable armature shaft is installed through the first end of the housing, and a rotatable drive shaft is installed through the second end of the housing. A first flexible seal is interposed between the rotatable armature shaft and the housing where the rotatable armature shaft passes through the first end of the housing, and a second flexible seal is interposed between the rotatable drive shaft and the housing where the rotatable drive shaft passes through the second end of the housing. A rotation transfer mechanism arranged within the housing in relation to the rotatable armature shaft and the rotatable drive shaft such that rotation of the rotatable armature shaft is converted into rotation of the rotatable drive shaft by the rotation transfer mechanism. In an aspect of this embodiment, the rotation transfer mechanism comprises a first rotatable gear within the housing, wherein the first rotatable gear is turned by the rotatable armature shaft, and at least one other rotatable gear within the housing, wherein the at least one other rotatable gear in turned by the first rotatable gear. In an aspect of this embodiment, the present invention comprises a lubricant substantially sealed within the housing. In an aspect of this embodiment, the present invention further comprises a clutch mechanism within the housing. The clutch mechanism is operative to permit rotation of the rotatable drive shaft in a first direction relative to the rotatable armature shaft, and to resist rotation of the rotatable drive shaft in a second direction relative to the rotatable armature shaft. In an aspect of this embodiment, the housing comprises a first housing piece and a second housing piece. The first housing piece and the second housing piece are joined together to form the housing. A gasket may be interposed between the first housing piece and the second housing piece where the first housing piece and the housing piece are joined together.

In an embodiment, the present invention comprises a rotation control assembly for use in conjunction with an internal combustion engine starter motor. The rotation control assembly of this embodiment comprises a housing having a first end and a second end. A rotatable armature shaft is installed through the first end of the housing, and a rotatable drive shaft is installed through the second end of the housing. A first flexible seal is interposed between the rotatable armature shaft and the housing where the rotatable armature shaft passes through the first end of the housing, and a second flexible seal is interposed between the rotatable drive shaft and the housing where the rotatable drive shaft passes through the second end of the housing. A clutch mechanism is provided within the housing. The clutch mechanism is operative to permit rotation of the rotatable drive shaft in a first direction relative to the rotatable armature shaft, and to resist rotation of the rotatable drive shaft in a second direction relative to the rotatable armature shaft. In an aspect of this embodiment, the clutch mechanism comprises a rotatable clutch piece comprising an outer circumference, which is provided proximate an inner circumference of the housing, and a rotation control mechanism provided between the housing and the rotatable clutch piece. The rotation control mechanism is operative to prevent rotation of the clutch piece in a first direction and allow rotation of the clutch piece in a second direction. In an aspect of this embodiment, the present invention further comprises a lubricant substantially sealed within the housing. In an aspect of this embodiment, the housing comprises a first housing piece, and a second housing piece. The first housing piece and the second housing piece are joined together to form the housing. A gasket may be interposed between the first housing piece and the second housing piece where the first housing piece and the housing piece are joined together.

In an embodiment, the present invention comprises a rotational speed conversion assembly for use in conjunction with an internal combustion engine starter motor. The rotational speed conversion assembly according to this embodiment comprises a housing having a first end and a second end. A rotatable armature shaft is installed through the first end of the housing, and a rotatable drive shaft is installed through the second end of the housing. A first flexible seal is interposed between the rotatable armature shaft and the housing where the rotatable armature shaft passes through the first end of the housing, and a second flexible seal is interposed between the rotatable drive shaft and the housing where the rotatable drive shaft passes through the second end of the housing. A gear oil lubricant is substantially sealed within the housing. A plurality of planetary gears are within the housing. Each of the plurality of planetary gears is rotatable on a respective pin. The pins are linked to the rotatable drive shaft. The armature shaft is engaged with the plurality of planetary gears within the housing. A clutch mechanism is provided coaxially around the plurality of planetary gears within the housing. The clutch mechanism comprises a rotatable clutch piece comprising an outer circumference and an inner circumference. The outer circumference of the rotatable clutch piece is provided proximate an inner circumference of the housing and the inner circumference of the rotatable clutch piece engaged with the plurality of planetary gears. A rotation control mechanism is provided between the housing and the rotatable clutch piece. The rotation control mechanism is operative to prevent rotation of the clutch piece in a first direction and allow rotation of the clutch piece in a second direction.

### BRIEF DESCRIPTION OF THE DRAWINGS

The features and advantages of this invention, and the methods of obtaining them, will be more apparent and better understood by reference to the following descriptions of embodiments of the invention, taken in conjunction with the accompanying drawings, wherein:
FIG. 1 shows a cross-sectional view of an electric starter motor comprising an embodiment of the present invention; and
FIG. 2 shows a cross-sectional view of an embodiment of a planetary gear assembly according to the present invention.

### DESCRIPTION

The present invention comprises a method for lubricating gear reduction and overrunning clutch mechanisms in electric starter motors, and apparatuses embodying the method. According to the present invention, sealing features are added to a gear reduction mechanism, overrunning clutch mechanism, or combined gear reduction and overrunning clutch mechanism. The sealed mechanism then is filled with oil for lubrication.

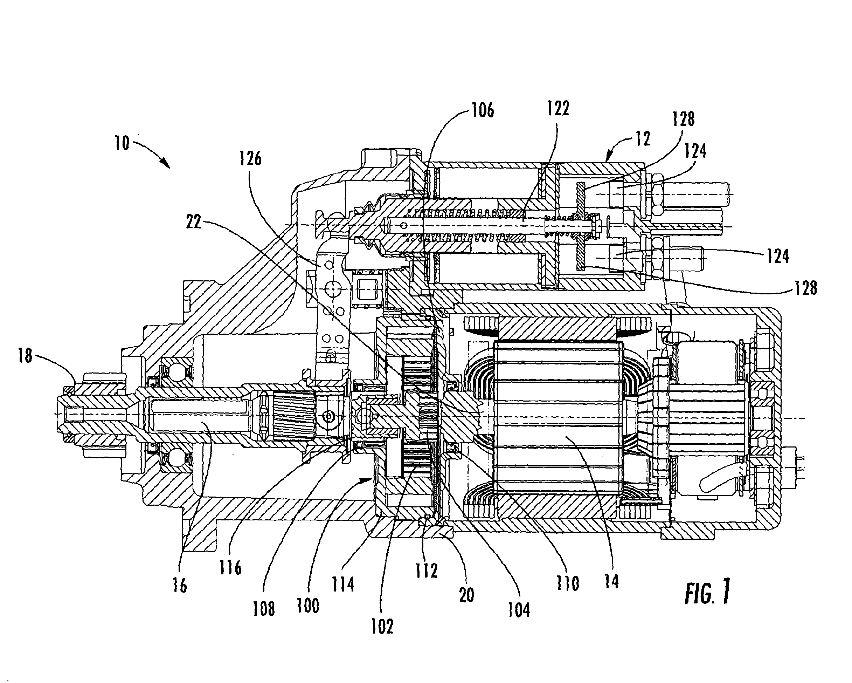

FIG. 1 shows a cross-sectional view of electric starter motor 10 comprising an embodiment of the present invention. Shown in FIG. 1 are solenoid assembly 12, electric motor 14, pinion gear shaft 16 comprising pinion gear 18, motor housing 20, and gear reduction mechanism 100.

Solenoid assembly 12 is an internal combustion engine starter motor solenoid comprising one or more coils (not shown), a plunger rod 122 carried within the solenoid coil(s), and a set of motor contacts 124. Upon excitation of the solenoid coil(s), plunger rod 122 is caused to move toward motor contacts 124. A linking rod 126 connects one end of plunger rod 122 to pinion gear shaft 16. A set of plunger rod contacts 128 are disposed at the opposite end of plunger rod 122. As plunger rod 122 moves, it causes linking rod 126 to rotate about a pivot point. Rotation of linking rod 126 about the pivot point moves pinion gear shaft 16 in a linear direction toward a flywheel ring gear of an internal combustion engine (not shown). When plunger rod 122 has traveled its full distance, plunger rod contacts 128 abut motor contacts 124, allowing electric current to flow to electric motor 14.

Electric motor 14 comprises a rotatable armature shaft 22. In the embodiment of the present invention shown in FIG. 1, one end of rotatable armature shaft 22 comprises sun gear 104. Sun gear 104 includes a set of splines on an outer circumference thereof.

Gear reduction mechanism 100 comprises gear support housing 114, which is seated into motor housing 20. In the embodiment of the present invention shown in FIG. 1, gear reduction mechanism 100 further comprises drive shaft 116 and a plurality of planetary gears 102. Each of the plurality of planetary gears 102 includes a set of splines on an outer circumference thereof. Each of the plurality of planetary gears 102 is rotatable on a respective pin (not shown). Each such pin is linked to drive shaft 116. Drive shaft 116 extends through gear support housing 114 and is engageable with pinion gear shaft 16 such as, for example, by engagement of splines on drive shaft 116 with splines on pinion gear shaft 16.

In the embodiment of the present invention shown in FIG. 1, the plurality of planetary gears 102 are arranged around sun gear 104, with the splines of sun gear 104 enmeshed with the splines of each of the plurality of planetary gears 102. Shield 106 fits on gear support housing 114, thereby holding plurality of planetary gears 102 and sun gear 104 in engagement. Armature shaft 22 extends through shield 106.

Although the embodiment of gear reduction mechanism 100 shown in FIG. 1 comprises a sun gear and a set of planetary gears, it will be appreciated that other mechanisms capable of transmitting the rotation of the armature shaft to the drive shaft while reducing the rate at which the drive shaft rotates relative to the armature shaft may be used. Each such mechanism is within the scope of the present invention.

In the embodiment of the present invention shown in FIG. 1, gear reduction mechanism 100 further comprises drive shaft seal 108, armature shaft seal 110, and gasket 112. Drive shaft seal 108 comprises a flexible sealing material that is disposed between gear support housing 114 and drive shaft 116 around the entire circumference of drive shaft 116. In the embodiment of the present invention shown in FIG. 1, drive shaft seal 108 is seated into a nest machined in gear support housing 114. The flexible sealing material comprising drive shaft seal 108 must be selected to withstand the rotation of drive shaft 116 during operation of gear reduction mechanism 100 (discussed hereinafter) while retaining the lubricant (discussed hereinafter) installed within gear reduction mechanism 100. In the embodiment of the present invention shown in FIG. 1, drive shaft seal 108 comprises a lip seal of a type known in the art. Other sealing techniques may be used, with each such technique being within the scope of the present invention.

Armature shaft seal 110 comprises a flexible sealing material that is disposed between shield 106 and armature shaft 22 around the entire circumference of armature shaft 22. In the embodiment of the present invention shown in FIG. 1, armature shaft seal 110 is seated into a nest machined in shield 106. The flexible sealing material comprising armature shaft seal 110 must be selected to withstand the rotation of armature shaft 22 during operation of gear reduction mechanism 100 (discussed hereinafter) while retaining the lubricant (discussed hereinafter) installed within gear reduction mechanism 100. In the embodiment of the present invention shown in FIG. 1, armature shaft seal 110 comprises a lip seal of a type known in the art. Other sealing techniques may be used, with each such technique being within the scope of the present invention.

Gasket 112 comprises a flexible sealing material that is disposed between shield 106 and gear support housing 114 around the entire circumference of gear support housing 114. In the embodiment of the present invention shown in FIG. 1, gasket 112 is seated into a groove machined in gear support housing 114. The flexible sealing material comprising gasket 112 must be selected to retain the lubricant (discussed hereinafter) installed within gear reduction mechanism 100. In the embodiment of the present invention shown in FIG. 1, gasket 112 comprises an O-ring of a type known in the art. Other sealing techniques may be used, with each such technique being within the scope of the present invention.

In the embodiment of the present invention shown in FIG. 1, gear reduction mechanism 100 is filled with a predetermined amount of a lubricant, such as, for example, a predetermined amount of a gear oil of a type known in the art. In an implementation of the embodiment of the present invention shown in FIG. 1, gear reduction mechanism 100 is filled with a 75W90 GL 4/5 synthetic gear oil. Other lubricants may be used, with each such lubricant being within the scope of the present invention.

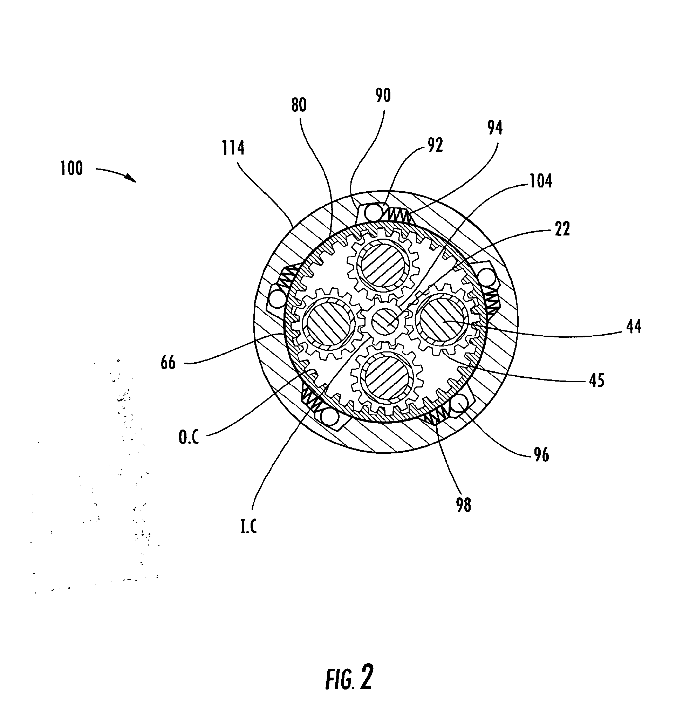

FIG. 2 shows a cross-sectional view of another embodiment of gear reduction mechanism 100 according to the present invention. According to the embodiment shown in FIG. 2, an overrunning clutch assembly is provided in conjunction with the gear reduction mechanism 100 of FIG. 1.

In the embodiment of the present invention shown in FIG. 2, a rotatable circular plate defines a planetary gear carrier and includes a plurality of pins 44 projecting from one side thereof. Each pin 44 (four are shown in FIG. 2 but this number is not required) supports and provides an axis of rotation for a rotatable planetary gear 45. Each planetary gear 45 includes a set of splines on an outer circumference thereof. As shown in FIG. 2, pins 44 and planetary gears 45 are disposed in a pattern so as to define an inner circle I.C. and an outer circle O.C. coaxially disposed around the center axis of sun gear 104. Armature shaft 22 projects into the center of inner circle I.C., and the splines of sun gear 104 engage the splines of each planetary gear 45 in inner circle I.C. Gear reduction mechanism 100 of this embodiment further includes drive shaft 116 (not shown in FIG. 2), arranged as shown in FIG. 1. Drive shaft 116 is also coaxial with the center axis of sun gear 104.

In the embodiment of gear reduction mechanism 100 according to the present invention shown in FIG. 2, an overrunning clutch assembly is provided coaxially around the plurality of planetary gears 102. As shown in FIG. 2, gear support housing 114 is coaxial with the center axis of sun gear 104, and includes an inner circumference 66. Inner circumference 66 includes a plurality of inner pockets 69, spaced apart from one another about inner circumference 66.

The embodiment of the overrunning clutch assembly shown in FIG. 2 comprises a rotatable annular inner clutch piece 80. Inner clutch piece 80 is coaxial with the central axis of sun gear 104, and includes a generally smooth outer circumference 82 and an inner circumference 84 which is configured with a plurality of axially extending splines. Smooth outer circumference 82 is configured to rotate with respect to the inner circumference 66 of gear support housing 114. The splines extending from inner circumference 84 are configured to engage with the splines of each planetary gear 45.

In the embodiment of the present invention shown in FIG. 2, gear reduction mechanism 100 comprises a rotation control mechanism interposed between gear support housing 114 and inner clutch piece 80. The rotation control mechanism prevents rotation of inner clutch piece 80 in a first direction and allow rotation of inner clutch piece 80 in a second direction. Each inner pocket 69 of gear support housing 114 includes three separate pocket portions. Each first pocket portion 90 has a first radial distance r₁ from the central axis of sun gear 104. Each second pocket portion 92 has a second radial distance r₂ from the central axis of sun gear 104. Each third pocket portion 94 has a third radial distance r₃ from the central axis of sun gear 104. The relationships between first radial distances r₁, second radial distances r₂, and third radial distances r₃ are as follows: r₂ > r₁ > r₃.

Axially extending roller pins 96 are provided to move between first pocket portions 90 and second pocket portions 92. Springs 98 are provided in third pocket portions 94, positioned in a circumferential orientation so as to provide a bias to roller pins 96 from the second pocket portions 92 toward the first pocket portions 90. In operation, rotation of inner clutch piece 80 in a first direction, e.g., counterclockwise in FIG. 2, will cause roller pins 96 to shift from wider second pocket portions 92 to narrower first pocket portions 90, under the bias of springs 98. Because of the smaller radii of the first pocket portions 90, roller pins 96 will be compressed between first pocket portions 90 and the outer circumference 82 of inner clutch piece 80. This compression causes inner clutch piece 80 to lock up and stop rotating in this particular direction. Conversely, rotation of inner clutch piece 80 in an opposite direction, e.g., clockwise in FIG. 2, causes roller pins 96 to move back into second pocket portions 92 against the bias of springs 98. The larger radii in second pocket portions 92 allow inner clutch piece 80 to rotate freely without interference from roller pins 96.

In the embodiment of gear reduction mechanism 100 according to the present invention shown in FIG. 2, the plurality of inner pockets 69 are formed in inner circumference 66 of gear support housing 114. However, it will be appreciated that the plurality of inner pockets 69 could be formed in outer circumference 82 of inner clutch piece 80, and this configuration is within the scope of the present invention.

Furthermore, although the embodiment of gear reduction mechanism 100 shown in FIG. 2 comprises an overrunning clutch mechanism utilizing a inner clutch piece, pocket portions, and spring biased roller pins, it will be appreciated that other mechanisms operative to permit rotation of the drive shaft and pinion gear relative to armature shaft in a first direction and resist rotation of the drive shaft and pinion gear relative to armature shaft in a second direction may be used. Each such mechanism is within the scope of the present invention.

In the embodiment of the present invention shown in FIG. 2, gear reduction mechanism 100 further comprises drive shaft seal 108, armature shaft seal 110, and gasket 112, arranged as shown and described in connection with FIG. 1. In the embodiment of the present invention shown in FIG. 2, gear reduction mechanism 100 is filled with a predetermined amount of a lubricant, such as, for example, a predetermined amount of a gear oil of a type known in the art.

The present invention comprises a method for lubricating gear reduction and overrunning clutch mechanisms in electric starter motors, and apparatuses embodying the method. According to the present invention, sealing features are added to a gear reduction mechanism, overrunning clutch mechanism, or combined gear reduction and overrunning clutch mechanism. The sealed mechanism then is filled with oil for lubrication. Oil has lower viscosity than the grease that was used in prior art lubrication techniques. Further, oil keeps its consistency for the lifetime of the lubricated mechanism. The placement of the sealing features retains the lubricant within the mechanism, and prevents debris from entering the mechanism.

In operation of a gear reduction mechanism, overrunning clutch mechanism, or combined gear reduction and overrunning clutch mechanism according to the present invention, the lubricating oil is dispersed throughout the sealed mechanism while the mechanism is spinning, thereby providing a substantially homogenous lubricating film on all the moving elements of the mechanism. In addition, because the mechanism is sealed, the components of the mechanism and also the lubricating material are protected against dust migration, which further improves the lubricating effect. Finally, an oil-lubricated mechanism also has less internal friction than a comparable grease-lubricated mechanism, so the frictional losses also can be reduced resulting in higher starter motor peak power and efficiency.

While this invention has been described as having a preferred design, the present invention can be further modified within the scope and spirit of this disclosure. This application is therefore intended to cover any variations, uses, or adaptations of the invention using its general principles. Each such implementation falls within the scope of the present invention as disclosed herein and in the appended claims. Furthermore, this application is intended to cover such departures from the present disclosure as come within known or customary practice in the art to which this invention pertains and which fall within the limits of the appended claims.

## Claims

1. A rotational speed conversion assembly for use in conjunction with an internal combustion engine starter motor, the rotational speed conversion assembly comprising:
a housing having a first end and a second end;
a rotatable armature shaft installed through said first end of said housing;
a rotatable drive shaft installed through said second end of said housing;
a first flexible seal interposed between said rotatable armature shaft and said housing where said rotatable armature shaft passes through said first end of said housing;
a second flexible seal interposed between said rotatable drive shaft and said housing where said rotatable drive shaft passes through said second end of said housing; and
a rotation transfer mechanism within said housing, said rotation transfer mechanism arranged in relation to said rotatable armature shaft and said rotatable drive shaft such that rotation of said rotatable armature shaft is converted into rotation of said rotatable drive shaft by said rotation transfer mechanism.

2. The rotational speed conversion assembly of claim 1, further comprising:
a clutch mechanism within said housing, said clutch mechanism operative to permit rotation of said rotatable drive shaft in a first direction relative to said rotatable armature shaft, and to resist rotation of said rotatable drive shaft in a second direction relative to said rotatable armature shaft.

3. The rotational speed conversion assembly of claim 1, wherein said rotation transfer mechanism comprises:
a first rotatable gear within said housing, said first rotatable gear being turned by said rotatable armature shaft; and
at least one other rotatable gear within said housing, said at least one other rotatable gear being turned by said first rotatable gear.

4. The rotational speed conversion assembly of claim 3, further comprising:
a clutch mechanism within said housing, said clutch mechanism operative to permit rotation of said rotatable drive shaft in a first direction relative to said rotatable armature shaft, and to resist rotation of said rotatable drive shaft in a second direction relative to said rotatable armature shaft.

5. The rotational speed conversion assembly of claim 1, wherein said housing comprises:
a first housing piece; and
a second housing piece, said first housing piece and said second housing piece being joined together to form said housing.

6. The rotational speed conversion assembly of claim 5, further comprising:
a gasket interposed between said first housing piece and said second housing piece where said first housing piece and said housing piece are joined together.

7. The rotational speed conversion assembly of claim 1, 2, 3, 4, 5 or 6, further comprising:
a lubricant within said housing, said lubricant being substantially sealed within said housing.

8. The rotational speed conversion assembly of claim 7, wherein said lubricant is a gear oil.

9. A rotation control assembly for use in conjunction with an internal combustion engine starter motor, the rotation control assembly comprising:
a housing having a first end and a second end;
a rotatable armature shaft installed through said first end of said housing;
a rotatable drive shaft installed through said second end of said housing;
a first flexible seal interposed between said rotatable armature shaft and said housing where said rotatable armature shaft passes through said first end of said housing;
a second flexible seal interposed between said rotatable drive shaft and said housing where said rotatable drive shaft passes through said second end of said housing; and
a clutch mechanism within said housing, said clutch mechanism operative to permit rotation of said rotatable drive shaft in a first direction relative to said rotatable armature shaft, and to resist rotation of said rotatable drive shaft in a second direction relative to said rotatable armature shaft.

10. The rotation control assembly of claim 9, wherein said clutch mechanism comprises:
a rotatable clutch piece comprising an outer circumference, said outer circumference of said rotatable clutch piece provided proximate an inner circumference of said housing; and
a rotation control mechanism provided between said housing and said rotatable clutch piece, said rotation control mechanism being operative to prevent rotation of said clutch piece in a first direction and allow rotation of said clutch piece in a second direction.

11. The rotation control assembly of claim 9, wherein said housing comprises:
a first housing piece; and
a second housing piece, said first housing piece and said second housing piece being joined together to form said housing.

12. The rotation control assembly of claim 11, further comprising:
a gasket interposed between said first housing piece and said second housing piece where said first housing piece and said housing piece are joined together.

13. The rotation control assembly of claim 9, 10, 11, or 12, further comprising:
a lubricant within said housing, said lubricant being substantially sealed within said housing.

14. The rotation control assembly of claim 13, wherein said lubricant is a gear oil.

15. A rotational speed conversion assembly for use in conjunction with an internal combustion engine starter motor, the rotational speed conversion assembly comprising:
a housing having a first end and a second end;
a rotatable armature shaft installed through said first end of said housing;
a rotatable drive shaft installed through said second end of said housing;
a first flexible seal interposed between said rotatable armature shaft and said housing where said rotatable armature shaft passes through said first end of said housing;
a second flexible seal interposed between said rotatable drive shaft and said housing where said rotatable drive shaft passes through said second end of said housing;
a gear oil lubricant within said housing, said gear oil lubricant being substantially sealed within said housing;
a plurality of planetary gears within said housing, each of said plurality of planetary gears being rotatable on a respective pin, said pins being linked to said rotatable drive shaft, said armature shaft being engaged with said plurality of planetary gears within said housing; and
a clutch mechanism provided coaxially around said plurality of planetary gears within said housing, said clutch mechanism comprising:
a rotatable clutch piece comprising an outer circumference and an inner circumference, said outer circumference of said rotatable clutch piece provided proximate an inner circumference of said housing and said inner circumference of said rotatable clutch piece engaged with said plurality of planetary gears, and
a rotation control mechanism provided between said housing and said rotatable clutch piece, said rotation control mechanism being operative to prevent rotation of said clutch piece in a first direction and allow rotation of said clutch piece in a second direction.
